# EUROPÄISCHE PATENTSCHRIFT

(11) **EP 2 205 938 B1**
(45) Veröffentlichungstag und Bekanntmachung des Hinweises auf die Patenterteilung: **19.06.2019**
(21) Anmeldenummer: 08841101.2
(22) Anmeldetag: 17.10.2008
(51) Int. Cl.: G01C 15/00, G01C 15/02

(54) **SYSTEM MIT EINER MARKIER- UND/ODER NIVELLIERVORRICHTUNG SOWIE MIT POSITIONIERMITTELN**
SYSTEM HAVING A MARKING AND/OR LEVELING DEVICE AND HAVING POSITIONING MEANS
SYSTÈME COMPRENANT UN DISPOSITIF DE MARQUAGE ET/OU DE NIVELAGE ET DES MOYENS DE POSITIONNEMENT

(30) Priorität: 22.10.2007 DE 102007050294
(43) Veröffentlichungstag der Anmeldung: 14.07.2010
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2008/064035
(87) Internationale Veröffentlichungsnummer: WO 2009/053313

(56) Entgegenhaltungen:
- EP-A0- 2 165 154
- WO-A-2009/003741
- CN-A- 101 105 400
- DE-A1- 4 131 295
- US-A- 4 446 626
- US-A1- 2005 016 004
- US-A1- 2006 080 849
- US-B1- 6 389 709

## Beschreibung

### Stand der Technik

Die Erfindung betrifft ein System gemäß dem Oberbegriff des Anspruchs 1.

Um Nivellier-, Ausricht- und/oder Markierungsaufgaben im Bereich des Handwerks, z. B. des Innenausbaus, durchzuführen, werden seit einiger Zeit Laserprodukte eingesetzt, die je nach Anwendung Lasermarkierungen erzeugen, um eine von der Ausrichtung von Böden, Decken oder Wänden unabhängige Referenz zu realisieren. Dabei unterscheidet man zwischen sogenannten Rotationslasern, bei denen ein Lasersignal durch Rotation der Lichtquelle oder eines strahlenumlenkenden Bauelementes in einer einzustellenden Ebene aufgefächert wird und somit eine Referenzfläche definiert und sogenannten Linienlasern, welche durch die Projektion des Lasersignals auf einer Referenzfläche ermöglichen, dass eine vorgegebene Richtung sichtbar wird und eingehalten werden kann.

In der Praxis treten häufig Fälle auf, bei denen eine gattungsgemäße Markier- und/oder Nivelliervorrichtung auf Höhe eingestellt werden muss. Bekannt ist es, hierzu die Markier- und/oder Nivelliervorrichtung an einem höhenverstellbaren Stativ zu befestigen. Nachteilig dabei ist, dass derartige Stative extrem platzeinnehmend sind, was zu Problemen beim Transport und der Lagerung mit sich bringt. Daneben ist es bekannt, Markier- und/oder Nivelliervorrichtungen an einem Untergestell zu befestigen, wobei derartige Lösungen nur einen sehr kleinen Verstellweg bieten.

Aus US4446626, WO09003741 und US2005016004 ist es ferner bekannt, eine Markier- und/oder Nivelliervorrichtung mittels Positioniermitteln hängend, beispielsweise an einer Decke oder an einer Schnur, zu befestigen. US 6,389,709 beschreibt ferner eine Vorrichtung zum Prüfen der Höhe zwischen Referenzmarken, die die Merkmale des Oberbegriffs des Anspruchs 1 umfasst.

### Offenbarung der Erfindung

### Technische Aufgabe

Der Erfindung liegt daher die Aufgabe zugrunde, ein System mit einer Markier- und/oder Nivelliervorrichtung vorzuschlagen, das zum einen klein baut und zum anderen einen großen Höhenverstellweg zur Positionierung der Markier- und/oder Nivelliervorrichtung in unterschiedlichen Positionen entlang der Lotrechten erlaubt. Ferner besteht die Aufgabe darin, entsprechend optimierte Positioniermittel vorzuschlagen.

### Technische Lösung

Diese Aufgabe wird mit einem System mit den Merkmalen des Anspruchs 1 gelöst. Vorteilhafte Weiterbildungen der Erfindung sind in den abhängigen Ansprüchen angegeben.

Der Erfindung liegt der Gedanke zugrunde, bei einem System, umfassend eine Markier- und/oder Nivelliervorrichtung, sowie Mittel zum lösbaren Festlegen an der Markier- und/oder Nivelliervorrichtung aufweisende Positioniermittel zum Positionieren der Markier- und/oder Nivelliervorrichtungen in unterschiedlichen Positionen entlang der Lotrechten, die Positioniermittel derart auszubilden, dass sie ein flexibles, band- und schnurförmiges Halteelement umfassen. Aufgrund der flexiblen, band- oder schnurförmigen Ausbildung des Halteelementes lässt sich dieses zu Transportzwecken auf ein kleines Volumen reduzieren. Darüber hinaus kann die Markier- und/oder Nivelliervorrichtung mittels des flexiblen Halteelementes auf einfache Weise in einem großen Höhenbereich in unterschiedlicher Position entlang der Lotrechten an einem Befestigungspunkt, beispielsweise einem Nagel oder einer Objektkante, etc. festgelegt werden. Ein nach dem Konzept der Erfindung ausgebildetes System bietet somit erstmals die Möglichkeit die Realisierung eines großen Höhenverstellweges mit einem minimalen Transport bzw. Lagervolumen der Projektionsmittel zu kombinieren. Entgegen bisher bekannten Positioniermitteln zeichnen sich die bei einem nach dem Konzept der Erfindung ausgebildeten System vorgesehenen Positioniermittel dadurch aus, dass sie die Markier- und/oder Nivelliervorrichtung nicht (von unten) stützen, sondern dass die Markier- und/oder Nivelliervorrichtung hängend mit Hilfe des flexiblen, wand- oder schnurförmigen Halteelementes entlang der Lotrechten positionierbar ist.

Ein weiterer Vorteil eines nach dem Konzept der Erfindung ausgebildeten Systems besteht darin, dass die Positioniermittel lösbar an der Markier- und/oder Nivelliervorrichtung, vorzugsweise an einem Gehäuse der Markier- und/oder Nivelliervorrichtung festlegbar sind, sodass die Positioniermittel die Arbeit mit der Markier- und/oder Nivelliervorrichtung für den Fall nicht behindern, dass die Positioniermittel nicht benötigt werden, beispielsweise weil die Markier- und/oder Nivelliervorrichtung mit einem Stativ oder ohne jegliche Positioniermittel genutzt wird. Entsprechende Mittel zum lösbaren Befestigen können beispielsweise als Rastmechanismus ausgebildet werden. Alternative form- und/oder kraftschlüssig wirkende Mittel zum Festlegen sind ebenfalls einsetzbar. Es ist alternativ realisierbar die Positioniermittel dauerhaft fest mit der Markier- und/oder Nivelliervorrichtung auszubilden, also als integralen Bestandteil der Markier- und/oder Nivelliervorrichtung.

In Weiterbildung der Erfindung ist mit Vorteil vorgesehen, dass das Halteelement mindestens ein Befestigungsmittel zum lösbaren Befestigen an einem Befestigungspunkt aufweist. Es gibt eine Vielzahl von Möglichkeiten zur konkreten Ausbildung der Befestigungsmittel. So ist es beispielsweise denkbar, dass die Befestigungsmittel ein Klebeelement umfassen, um das Halteelement an einem Objekt (lösbar) festkleben zu können. Zusätzlich oder alternativ kann das Halteelement mindestens einen Haken oder ein Loch zum Durchführen eines am Befestigungspunkt vorgesehenen Nagels aufweisen. Von besonderem Vorteil ist eine Ausführungsform, bei der das Halteelement nicht nur ein einziges Befestigungsmittel, sondern mehrere entlang seiner Längserstreckung beabstandete Befestigungsmittel aufweist, um das Halteelement in unterschiedlichen Relativpositionen zu einem Befestigungspunkt an dem Befestigungspunkt festlegen zu können und somit die Markier- und/oder Nivelliervorrichtung in unterschiedlichen Höhenpositionen positionieren zu können.

Zusätzlich oder alternativ zu dem Vorsehen mehrerer Befestigungsmittel ist eine Ausführungsform von Vorteil, bei der die Positioniermittel Rollmittel zum Auf- und Abrollen des Halteelementes aufweisen. Auf diese Weise ist es möglich die Markier- und/oder Nivelliervorrichtung an (beliebigen) Relativpositionen relativ zu dem Befestigungspunkt entlang der Lotrechten zu positionieren. Hierzu muss lediglich die gewünschte Länge des Halteelementes von den Rollmitteln abgewickelt werden.

Besonders bevorzugt ist eine Ausführungsform, bei der die Rollmittel einen automatischen Aufrollmechanismus aufweisen. Dieser kann beispielsweise durch das Vorsehen eines mit den Rollmitteln zusammenwirkenden Elektromotors realisiert werden, wobei auch eine Ausführungsform realisierbar ist, bei der das Halteelement mittels des Elektromotors abwickelbar ist. Zusätzlich oder alternativ zu einem Elektromotor kann auch ein, vorzugsweise spiralförmiges, Federelement als Energiespeicher vorgesehen werden, mittels dem die Rollmittel, insbesondere nach Lösen einer Arretierung das Halteelement automatisch aufwickeln. Bei dieser Ausführungsform wird das Federelement bevorzugt durch Abrollen des Halteelementes von den Rollmitteln, vergleichbar mit einem Rückhaltegurt in einem Kraftfahrzeug, gespannt.

In Weiterbildung der Erfindung ist mit Vorteil vorgesehen, dass Arretiermittel zum Arretieren des Halteelementes in unterschiedlichen Abrollpositionen vorgesehen sind. Diese Arretiermittel verhindern ein unbeabsichtigtes Aufrollen des Halteelementes und/oder ein unbeabsichtigtes weiteres Abrollen der Haltemittel. Das Vorsehen von Arretiermitteln ermöglicht eine exakte Positionierung der Markier- und/oder Nivelliervorrichtung.

Im Hinblick auf die Ausbildung der Arretiermittel ist eine Vielzahl von Ausführungsformen realisierbar. Besonders bevorzugt ist eine Ausführung, bei der die Rollmittel mindestens eine Raste umfassen, mittels der die Rollmittel, insbesondere eine Rolle der Rollmittel in unterschiedlichen Drehpositionen arretierbar sind/ist. Zusätzlich oder alternativ können die Arretiermittel derart ausgebildet sein, dass sie die Rollmittel oder das Halteelement reibschlüssig arretieren. Erst nach Lösen der Arretiermittel ist ein weiteres Auf- und/oder Abrollen des flexiblen Halteelementes möglich. Dabei können die Arretiermittel entweder unmittelbar in Wechselwirkung mit dem Halteelement und/oder unmittelbar in Wechselwirkung mit den Rollmitteln, insbesondere einer Rolle der Rollmittel treten.

Im Hinblick auf die konkrete Ausgestaltung von Mitteln zum lösbaren Befestigen der Positioniermittel an der Markier- und/oder Nivelliervorrichtung gibt es eine Vielzahl von Realisierungsmöglichkeiten. Grundsätzlich ist es realisierbar, die Positioniermittel form- und/oder reibschlüssig mit der Markier- und/oder Nivelliervorrichtung, vorzugsweise mit deren Gehäuse zu verbinden. Besonders bevorzugt kann zum lösbaren Verbinden der Positioniermittel mit der Markier- und/oder Nivelliervorrichtung ein Rastmechanismus vorgesehen werden. Ebenso ist das, insbesondere unverlierbare, Aufschieben der Positioniermittel auf die Markier- und/oder Nivelliervorrichtung realisierbar, beispielsweise durch das Vorsehen einer, insbesondere schwalbenschwanzförmigen, Nut-Federverbindung. Weiterhin ist es denkbar, eine lösbare Schraubverbindung zwischen den Positioniermitteln und der Markier- und/oder Nivelliervorrichtung vorzusehen.

In Weiterbildung der Erfindung ist mit Vorteil vorgesehen, dass das Halteelement eine Längenskala aufweist, an der ablesbar ist, wie weit das Halteelement von den Rollmitteln abgerollt ist, um so die exakte Höhenposition der Markier- und/oder Nivelliervorrichtung relativ zu dem Befestigungspunkt bestimmen zu können. Zusätzlich oder alternativ zu einer Längenskala sind bevorzugt Mittel zum automatischen Bestimmen und Anzeigen der Abrolllänge des Halteelementes vorgesehen. Diese umfassen bevorzugt eine Wegmesseinrichtung, mit der bestimmbar ist, wie weit das Halteelement von der Rolle abgerollt ist. Ferner umfassen die Mittel bevorzugt ein Display, auf dem die abgerollte Länge anzeigbar ist.

Von besonderem Vorteil ist eine Ausführungsform, bei der die Positioniermittel einen Seilzug umfassen, das Halteelement also Bestandteil des Seilzuges ist. Mit Hilfe des Seilzugs kann durch Ziehen oder Lösen des Halteelementes die Markier- und/oder Nivelliervorrichtung in unterschiedlichen Höhenpositionen relativ zu einem Befestigungspunkt entlang der Lotrechten positioniert werden.

In der Erfindung ist vorgesehen, dass die Markier- und/oder Nivelliervorrichtung als selbstnivellierende Vorrichtung ausgebildet ist. Dabei umfasst die Markier- und/oder Nivelliervorrichtung Ausrichtemittel zum horizontalen und/oder vertikalen Ausrichten der Lichtquelle, um an der Lotrechten orientierte, insbesondere horizontale und/oder vertikale, vorzugsweise im Querschnitt linienförmige, Markierungen auf eine Projektionsebene projizieren zu können. Zum Ausrichten der Lichtquelle ist es möglich, eine Pendelvorrichtung, vorzugsweise mit Kardangelenk vorzusehen. Bevorzugt umfasst die Pendelvorrichtung einen Bremsmechanismus bzw. Dämpfungsmechanismus mittels dem die Pendelbewegung dämpfbar ist. Alternativ ist es denkbar, die Markier- und/oder Nivelliervorrichtung mit mindestens einem Lagesensor auszustatten, mit dem die Relativlage der Lichtquelle relativ zur Horizontalen oder zur Vertikalen ermittelbar ist, wobei der Lagesensor signalleitend mit einer Steuereinheit verbunden ist, welche einen Stellmotor derart ansteuert, dass die Lichtquelle auf Basis der Lagesensorinformationen horizontal oder vertikal ausgerichtet wird.

### Kurze Beschreibung der Zeichnungen

Weitere Vorteile, Merkmale und Einzelheiten der Erfindung ergeben sich aus der nachfolgenden Beschreibung bevorzugter Ausführungsformen, sowie anhand der Zeichnungen. Diese zeigen in:
- Fig. 1:: eine schematische, geschnittene Ansicht einer als Pendellaservorrichtung ausgebildeten, selbstnivellierenden Markier- und/oder Nivelliervorrichtung mit lösbar an dieser befestigten, Rollmittel aufweisenden Positioniermitteln, und
- Fig. 2:: eine um 90° gedrehte Ansicht der Markier- und/oder Nivelliervorrichtung gemäß Fig. 1 von außen.

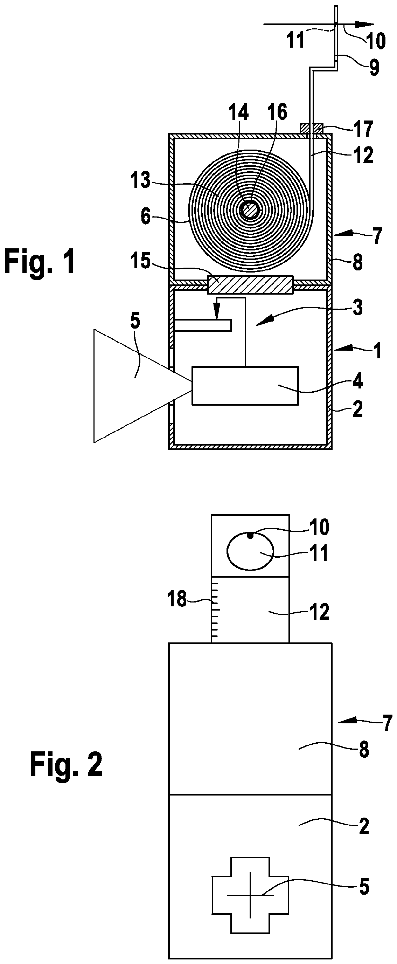

Fig. 1 zeigt eine selbstnivellierende Markier- und/oder Nivelliervorrichtung 1 mit einem Gehäuse 2. Innerhalb des Gehäuses 2 ist eine lediglich schematisch angedeutete, als Pendelanordnung ausgebildete Selbst-Nivellieranordnung 3 angeordnet, mit der eine als Laserdiode ausgebildete Lichtquelle 4 zum Erzeugen eines an der Lotrechten orientierten Laserstrahls 5 in üblicher Weise unabhängig von einer Gehäuseausrichtung selbst-ausrichtbar ist. Alternativ kann auch eine aktive Selbst-Nivellieranordnung mit mindestens einem Lagesensor und mit mindestens einem Stellmotor eingesetzt werden.

Die gezeigte, selbstnivellierende Markier- und/oder Nivelliervorrichtung dient vorwiegend zur Markierung mit Hilfe von mittels des Laserstrahls 5 erzeugten horizontalen und/oder vertikalen und/oder unter einem festen Winkel (z. B. 45°) zur Lotrechten orientierten Linien auf einer nicht gezeigten Projektionsebene. An der Markier- und/oder Nivelliervorrichtung 1, in diesem Ausführungsbeispiel am Gehäuse 2, sind Rollmittel 6 umfassende Positioniermittel 7 lösbar festgelegt. Zu diesem Zweck trägt ein Positioniermittelgehäuse 8 lediglich schematisch angedeutete Fixiermittel 15. Mit Hilfe der Fixiermittel 15 kann die Markier- und/oder Nivelliervorrichtung 1 mit den Positioniermitteln 7 durch Form- und/oder Reibschluss lösbar miteinander verbunden werden. Die Fixiermittel 15 können dabei beispielsweise als Rastmechanismus, als Nut-Federverbindung, als Klemmmechanismus etc. ausgebildet sein. Wesentlich ist, dass die Positioniermittel 7 nicht dauerhaft an der Markier- und/oder Nivelliervorrichtung 1 festgelegt sind, sondern dass die Positioniermittel 7 bei Bedarf von der Markier- und/oder Nivelliervorrichtung 1, hier von dem Gehäuse 2, getrennt werden können.

Aus dem Positioniermittelgehäuse 8 ist ein als Rollband ausgebildetes, flexibles Halteelement 12 ausziehbar und mit seinem freien Ende 9, beispielsweise an einem durch einen Pfeil symbolisierten Befestigungspunkt 10 lösbar fixierbar. Der Befestigungspunkt 10 kann beispielsweise von einem Nagel gebildet werden. Zum Festlegen an dem Befestigungspunkt 10 ist das freie Ende 9 des als Rollband ausgebildeten Halteelementes 12 mit Befestigungsmitteln 11 versehen. Diese sind in dem gezeigten Ausführungsbeispiel als metallverstärkte Lasche mit Öffnung ausgebildet (vgl. Fig. 2), so dass das Halteelement 12, beispielsweise an einem Nagel, mittels der Öffnung aufhängbar ist. Das als Rollband ausgebildete Haltemittel 12 ist derart ausgelegt, dass es das Gewicht des gesamten Systems halten, d.h. tragen kann. Mit Hilfe der Positioniermittel 7 ist die Markier- und/oder Nivelliervorrichtung 1 in unterschiedlichen Höhenpositionen relativ zu dem Befestigungspunkt 10 aufhängbar, sodass Markierungen in unterschiedlichen Höhenpositionen entlang der Lotrechten auf eine Projektionsebene aufgebracht werden können.

Die Rollmittel 6 umfassen einen Aufroll- bzw. Abrollmechanismus 13, der ein nicht gezeigtes Federelement (Rückstellfeder) zum automatischen Aufrollen des Halteelementes 12 auf eine Rolle 14 aufweist. Die Rolle 14 weist eine Welle 16 auf, die drehbar in dem Positioniermittelgehäuse 8 gelagert ist.

Dem Halteelement 12 sind als Klemmeinrichtung ausgebildete Arretiermittel 17 zugeordnet, mit deren Hilfe ein unbeabsichtigtes Aufrollen und Abrollen der Haltemittel 12 von der Rolle 14 verhindert wird. Das Halteelement 12 ist dabei in beliebigen Abrollpositionen mit Hilfe der Arretiermittel 17 klemmbar, sodass die Markier- und/oder Nivelliervorrichtung 1 und damit die Lichtquelle 4 in beliebigen Höhenpositionen relativ zu den Befestigungsmitteln 11 (exakt) positionierbar ist.

Die Arretiermittel 17 sind im gezeigten Ausführungsbeispiel lediglich exemplarisch als Klemmmittel ausgebildet. Alternativ können die Arretiermittel 17 beispielsweise als Rastmechanismus ausgebildet werden. Dabei ist es denkbar, die Arretiermittel 17 nicht, wie gezeigt, unmittelbar dem Halteelement 12, sondern beispielsweise unmittelbar den Rollmitteln 6, insbesondere der Rolle 14, zuzuordnen.

Aus Fig. 2 ist zu entnehmen, dass mittels der in Fig. 1 angedeuteten, als Laserdiode ausgebildeten Lichtquelle 4 ein im Querschnitt kreuzförmig konturierter Laserstrahl 5 erzeugbar ist. Alternative Ausführungsformen, beispielsweise mit einen im Querschnitt linienförmigen Laserstrahl, sind ebenfalls realisierbar.

Wie sich weiterhin aus Fig. 2 ergibt, ist das Halteelement 12 mit einer Längenskala 18 ausgestattet, anhand der die abgerollte Länge des Halteelementes 12 und/oder die Position des Laserstrahls 5 relativ zu dem Befestigungspunkt 10 bestimmbar ist.

## Patentansprüche

1. System, umfassend eine Markier- und/oder Nivelliervorrichtung (1) mit mindestens einer Lichtquelle (4) zur Projektion einer Markierung auf eine Projektionsebene, und Mittel zum lösbaren Festlegen an der Markier- und/oder Nivelliervorrichtung (1) aufweisende Positioniermittel (7) zur Positionierung der Markier- und/oder Nivelliervorrichtung (1) in unterschiedlichen Positionen entlang der Lotrechten, wobei die Positioniermittel (7) ein flexibles, band- und/oder schnurförmiges Halteelement (12) zum Aufhängen der Markier- und/oder Nivelliervorrichtung (1) an einem Befestigungspunkt (10) aufweisen, wobei die Positioniermittel (7) Rollmittel (6) zum Auf- und Abrollen des Halteelementes (12) aufweisen, **dadurch gekennzeichnet, dass** die Markier- und/oder Nivelliervorrichtung (1) als selbstnivellierende Vorrichtung ausgebildet ist, bei der die Lichtquelle (4), insbesondere eine Laserstrahlquelle, zur Erzeugung eines an der Lotrechten orientierten, insbesondere horizontalen und/oder vertikalen, vorzugsweise im Querschnitt linienförmigen, Laserstrahls (5) unabhängig von einer Gehäuseausrichtung ausrichtbar ist.

2. System nach Anspruch 1, **dadurch gekennzeichnet, dass** das Haltelement (12) mindestens ein Befestigungsmittel (11), insbesondere ein Klebeelement, einen Haken oder ein Loch, vorzugsweise mehrere entlang seiner Längserstreckung beabstandete Befestigungsmittel (11), zum Festlegen an dem Befestigungspunkt (10) aufweist.

3. System nach Anspruch 1 oder 2, **dadurch gekennzeichnet, dass** die Rollmittel (6) mindestens ein Federelement zum automatischen Aufrollen des Haltelementes (12) aufweisen.

4. System nach einem der vorhergehenden Ansprüche, **dadurch gekennzeichnet, dass** Arretiermittel (17) zum Arretieren des Halteelementes (12) in unterschiedlichen, vorzugsweise beliebigen oder definitiven, Abrollpositionen vorgesehen sind.

5. System nach Anspruch 4, **dadurch gekennzeichnet, dass** die Arretiermittel (17) mindestens eine Raste aufweisen, mittels der die Rollmittel (6) in unterschiedlichen definierten Drehpositionen arretierbar sind.

6. System nach einem der Ansprüche 4 oder 5, **dadurch gekennzeichnet, dass** die Arretiermittel (17), die Rollmittel (6) oder das Halteelement (12) reibschlüssig und/oder formschlüssig arretierend ausgebildet sind.

7. System nach einem der vorhergehenden Ansprüche, **dadurch gekennzeichnet, dass** die Positioniermittel (7), mit der Markier- und/oder Nivelliervorrichtung (1) form- und/oder reibschlüssig verbindbar, insbesondere verrastbar, verklemmbar, ineinander verschiebbar oder miteinander verschraubbar sind.

8. System nach einem der vorhergehenden Ansprüche, **dadurch gekennzeichnet, dass** das Haltelement (12) eine Längenskala (18) aufweist und/oder dass Mittel zum automatischen Bestimmen und Anzeigen der Abrolllänge des Haltelementes (12) und/oder Mittel zum Bestimmen der Position des Lichtstrahls (5) zu dem Befestigungspunkt (10) oder zu einem vorgebbaren Bezugspunkt vorgesehen sind.

9. System nach einem der vorhergehenden Ansprüche, **dadurch gekennzeichnet, dass** das Halteelement (12) Bestandteil eines Seilzugs zur variablen Höheneinstellung ist.

## Claims

1. System comprising a marking and/or levelling device (1) having at least one light source (4) for projecting a marking onto a projection plane, and positioning means (7), which have means for detachable fixing to the marking and/or levelling device (1) and which serve for the positioning of the marking and/or levelling device (1) in different positions along the vertical, wherein the positioning means (7) have a flexible, band-like and/or cord-like holding element (12) for the suspension of the marking and/or levelling device (1) at a fastening point (10), wherein the positioning means (7) have roller means (6) for the rolling-up and unrolling of the holding element (12), **characterized in that** the marking and/or levelling device (1) is in the form of a self-levelling device in which the light source (4), in particular a laser beam source, can be oriented, independently of a housing orientation, so as to generate an in particular horizontal and/or vertical laser beam (5) which is oriented with respect to the vertical and which is preferably linear in cross section.

2. System according to Claim 1, **characterized in that** the holding element (12) has at least one fastening means (11), in particular an adhesive element, a hook or a hole, preferably multiple fastening means (11) which are spaced apart along the longitudinal extent of said holding element, for the fixing at the fastening point (10).

3. System according to Claim 1 or 2, **characterized in that** the roller means (6) have at least one spring element for the automatic rolling-up of the holding element (12).

4. System according to any of the preceding claims, **characterized in that** arresting means (17) are provided for arresting the holding element (12) in different, preferably arbitrary or definitive, unrolling positions.

5. System according to Claim 4, **characterized in that** the arresting means (17) have at least one detent by means of which the roller means (6) can be arrested in different defined rotational positions.

6. System according to either of Claims 4 and 5, **characterized in that** the arresting means (17), the roller means (6) or the holding element (12) are designed with frictionally locking and/or positively locking arresting action.

7. System according to any of the preceding claims, **characterized in that** the positioning means (7) are connectable to the marking and/or levelling device (1) in positively locking and/or frictionally locking fashion, in particular engageable with detent action, clampable, slidable one inside the other, or capable of being screwed together.

8. System according to any of the preceding claims, **characterized in that** the holding element (12) has a length scale (18) and/or **in that** means for automatically determining and displaying the unrolled length of the holding element (12) and/or means for determining the position of the light beam (5) relative to the fastening point (10) or relative to a predefinable reference point are provided.

9. System according to any of the preceding claims, **characterized in that** the holding element (12) is a constituent part of a cable pull for variable height setting.

## Revendications

1. Système comprenant un dispositif de marquage et/ou de nivelage (1) comportant au moins une source de lumière (4) destinée à projeter un repère sur un plan de projection, et des moyens de positionnement (7) comportant des moyens de fixation amovible au dispositif de marquage et/ou de nivelage (1) servant à positionner le dispositif de marquage et/ou de nivelage (1) dans différentes positions le long des verticales, dans lequel les moyen de positionnement (7) comportent un élément de retenue flexible en forme de bande et/ou de cordon (12) destiné à la suspension du dispositif de marquage et/ou de nivelage (1) à un point de fixation (10), dans lequel les moyens de positionnement (7) comportent des moyens d'enroulement (6) destinés à enrouler et à dérouler l'élément de retenue (12), **caractérisé en ce que** le dispositif de marquage et/ou de nivelage (1) est réalisé sous la forme d'un dispositif autonivelant, dans lequel la source lumineuse (4), en particulier une source de faisceau laser, peut être orientée indépendamment d'une orientation du boîtier afin de générer un faisceau laser (5) qui est orienté verticalement, et qui est notamment horizontal et/ou vertical et qui présente de préférence une section transversale de forme linéaire.

2. Système selon la revendication 1, **caractérisé en ce que** l'élément de retenue (12) comporte au moins un moyen de fixation (11), notamment un élément adhésif, un crochet ou un trou, de préférence plusieurs moyens de fixation (11) espacés le long de son étendue longitudinale, permettant une fixation au point de fixation (10).

3. Système selon la revendication 1 ou 2, **caractérisé en ce que** les moyens d'enroulement (6) comprennent au moins un élément élastique destiné à enrouler automatiquement l'élément de retenue (12).

4. Système selon l'une des revendications précédentes, **caractérisé en ce qu'**il est prévu des moyens de blocage (17) destinés à bloquer l'élément de retenue (12) dans différentes positions de déroulement, de préférence quelconques ou définitives.

5. Système selon la revendication 4, **caractérisé en ce que** les moyens de blocage (17) comportent au moins un cran au moyen duquel les moyens d'enroulement (6) peuvent être bloqués dans différentes positions de rotation définies.

6. Système selon l'une des revendications 4 ou 5, **caractérisé en ce que** les moyens de blocage (17), les moyens d'enroulement (6) ou l'élément de retenue (12) sont conçus pour permettre un blocage par complémentarité de frottement et/ou par complémentarité de forme.

7. Système selon l'une des revendications précédentes, **caractérisé en ce que** les moyens de positionnement (7) peuvent être reliés au dispositif de marquage et/ou de nivelage (1) par complémentarité de forme et/ou de frottement et peuvent notamment être encliquetés, serrés ou amenés à coulisser les uns dans les autres ou vissés les uns aux autres.

8. Système selon l'une des revendications précédentes, **caractérisé en ce que** l'élément de retenue (12) comporte une échelle de longueur (18) et/ou **en ce qu'**il est prévu des moyens destinés à déterminer et indiquer automatiquement la longueur de déroulement de l'élément de retenue (12) et/ou des moyens destinés à déterminer la position du faisceau lumineux (5) par rapport au point de fixation (10) ou à un point de référence pouvant être prédéterminé.

9. Système selon l'une des revendications précédentes, **caractérisé en ce que** l'élément de retenue (12) fait partie d'un système de traction de câble permettant d'effectuer un réglage en hauteur variable.
